# EUROPÄISCHE PATENTSCHRIFT

(11) **EP 1 947 429 B1**
(45) Veröffentlichungstag und Bekanntmachung des Hinweises auf die Patenterteilung: **03.04.2013**
(21) Anmeldenummer: 07123857.0
(22) Anmeldetag: 20.12.2007
(51) Int. Cl.: G01F 23/26, G01F 25/00

(54) **Verfahren zur Bedienung einer Vorrichtung zur kapazitiven Bestimmung und/oder Überwachung einer Prozessgröße**
Method for operating a device for capacitative measurement and/or monitoring of a process variable
Procédé destiné à la commande d'un dispositif de détermination capacitive et/ou de surveillance d'une grandeur de processus

(30) Priorität: 19.01.2007 DE 102007003887
(43) Veröffentlichungstag der Anmeldung: 23.07.2008
(73) Patentinhaber: Endress+Hauser GmbH+Co. KG, 79689 Maulburg (DE)
(72) Erfinder: Dreyer, Volker, 79541, Lörrach (DE); Dieterle, Roland, 79588, Efringen-Kirchen (DE); Wernet, Armin, 79618, Rheinfelden (DE)
(74) Vertreter: Andres, Angelika Maria

(56) Entgegenhaltungen:
- EP-A1- 0 724 140
- EP-B1- 0 291 508
- DE-A1-102004 050 495
- US-A- 4 806 847
- US-A1- 2006 022 682
- US-B1- 6 564 630

## Beschreibung

Die Erfindung bezieht sich auf ein Verfahren zur Bedienung, insbesondere zur Kontrolle, einer Vorrichtung zur kapazitiven Bestimmung und/oder Überwachung des Füllstands eines Mediums, wobei die Vorrichtung mindestens eine Sondeneinheit mit einer Sondenelektrode und einer Zusatzelektrode aufweist. Bei der Prozessgröße handelt es sich um den Füllstand des Mediums, welches beispielsweise eine Flüssigkeit oder ein Schüttgut ist. Eine Kontrolle bedeutet beispielsweise eine Überprüfung oder einen Test des Messgerätes in Bezug auf die Zuverlässigkeit der Messungen oder des Zustandes des Messgerätes an sich.

In der Prozess- und Automatisierungstechnik ist es bekannt, den Füllstand eines Mediums mittels des kapazitiven Messverfahrens zu bestimmen oder zu überwachen. In diesem Verfahren bilden eine Sondeneinheit und die Wandung des Behälters bzw. eine zweite Sondeneinheit in Verbindung mit dem Medium als Dielektrium einen Kondensator. Die Kapazität dieses Kondensators wird ausgemessen und ausgehend von diesem Wert wird der Füllstand ermittelt. Eine Problematik des Verfahrens besteht darin, dass die Sondeneinheit mit dem Medium in Kontakt kommt und dass es daher zu einer Ansatzbildung an der Sondeneinheit kommen kann. Ein solcher Ansatz führt dazu, dass die Messung beeinträchtigt oder sogar verhindert wird. Im Stand der Technik ist es bekannt, die Sondeneinheit mit einer relativ hohen Messfrequenz zu beaufschlagen (z.B. größer 1 MHz), um die Ansatzverträglichkeit zu verbessern. Nachteilig an einer hohen Messfrequenz ist, dass dies mit einer Abnahme der zulässigen maximalen Sondenlänge einhergeht. Dies liegt daran, dass frequenzabhängige Resonanzeffekte auf der Sonde entstehen, welche eine lineare Messung verhindern.

Bei Ansatzbildung zwischen Behälterwand und Sondeneinheit besteht eine weitere Möglichkeit darin, sog. Guardelektroden zu verwenden, welche auf dem gleichen elektrischen Potential wie die Sondenelektrode liegen und die Sondenelektrode umgeben (siehe z.B. DE 32 12 434 C2). Je nach Beschaffenheit des Ansatzes ist es jedoch möglich, dass es Schwierigkeiten gibt, das Guardsignal passend zu erzeugen (DE 10 2004 050 495 A1). In diesem Fall besteht die Sondeneinheit somit aus einer Sondenelektrode und einer Zusatzelektrode, wobei die Sondenelektrode der eigentlichen Messung und die Zusatzelektrode als Guard dient.

In der modernen Messtechnik wird immer mehr gefordert, dass vorausschauende Selbsttests eines Messgerätes durchgeführt werden. Somit sollen beispielsweise Frühwarnungen möglich sein, bevor das Messgerät ausfällt oder bevor die Messergebnisse unzuverlässig werden könnten.

Der Erfindung liegt die Aufgabe zugrunde, ein Verfahren zur Überwachung eines kapazitiven Messgerätes bzw. der Funktionstüchtigkeit des Messgerätes vorzuschlagen, den Ansprüchen 1-4 entsprechend.

In der Erfindung wird somit quasi die Zusatz- bzw. Guardelektrode zu- und wegschaltbar ausgestaltet, so dass darüber Information über den Zustand der Sonde und der Umgebung gewonnen wird. In einer Messung ist der Guard aktiv, indem er mit dem gleichen Signal wie die Sondenelektrode beaufschlagt wird. Bei der zweiten Messung ist der Guard inaktiv, indem der Guard wird auf Masse gelegt. Entsprechendes gilt für die Messung, bei welcher die Sondenelektrode auf Masse liegt. Zwischen diesen beiden Messungen liegt im Normalbetrieb, d.h. wenn alles in Ordnung ist, ein konstanter kapazitiver Offset. Dieser kann fertigungsseitig ermittelt und abgespeichert werden. Wird nun im Normalbetrieb regelmäßig zwischen den zwei Zuständen hin und her geschaltet, d.h. werden die beiden Antwortsignale gewonnen, wobei zumindest das zweite Antwortsignal sich auch bei einer normalen Füllstandsmessung ergibt, und unterscheidet sich der ermittelte Offset vom hinterlegten bzw. abgespeicherten Wert, so kann dies beispielsweise folgende Ursachen haben: die Sondeneinheit ist komplett abgerissen oder die elektrische Kontaktierung der Sondeneinheit, der Sondenelektrode oder der Zusatz-/Guardelektrode ist beeinträchtigt oder das Ansteuersignal, d.h. zumindest das Testsignal oder die Kontaktierung mit Masse oder das floatend halten ist fehlerhaft oder ein Ansatz an der Sondeneinheit ist so niederohmig, dass durch die Zusatzelektrode kann die Guardfunktion nicht ausgeführt werden. Im Messgerät sind entsprechende Mittel für die Durchführung des Verfahrens vorgesehen, z.B. Schalter, Verbindungen, Signalerzeuger etc., welche jedoch auch für den normalen Betrieb Verwendung finden.

Die Erfindung wird anhand der nachfolgenden Zeichnungen näher erläutert. Es zeigt:

Fig. 1: eine schematische Darstellung einer kapazitiven Füllstandsmessung,

Fig. 2: einen schematischen Schnitt durch eine Sondeneinheit mit einer ersten Variante der Signalbeaufschlagung,

Fig. 3: einen Schnitt durch eine Sondeneinheit mit einer zweiten Variante der Signalbeaufschlagung,

Fig. 4: eine schematische Darstellung der prinzipiellen Erzeugung der Signale für die Beaufschlagung,

Fig. 5: eine schematische Darstellung eines Endbereichs einer Sondeneinheit,

Fig. 6: einen Schnitt durch eine schematische Sondeneinheit, und

Fig. 7: jeweils ein Signalverlauf für die Testsignale, mit denen die Sondeneinheit beaufschlagt wird.

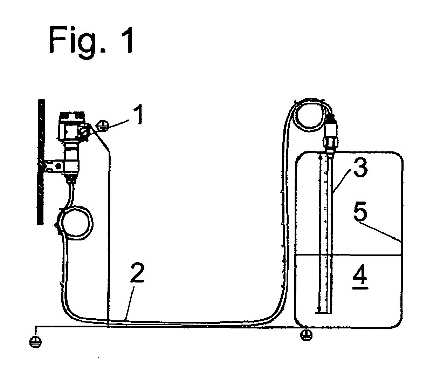

In der Fig. 1 ist der prinzipielle Aufbau einer kapazitiven Messung des Füllstandes eines Mediums 4, bei welchem es sich beispielsweise um eine Flüssigkeit oder um ein Schüttgut handelt, in einem Behälter 5 dargestellt. Dafür ist eine Elektronikeinheit 1 vorgesehen, welche hier über ein Kabel 2 die Sondeneinheit 3 mit dem Ansteuersignal bzw. für die Überwachung mit dem Testsignal beaufschlagt bzw. mit den passenden Potentialen verbindet oder floaten lässt. Dabei handelt es sich jeweils um eine elektrische Wechselspannung. Hier wird auch von der Elektronikeinheit 1 die Kontaktierung mit Masse bzw. das floaten lassen für die Überwachung gesteuert.

Die Sondeneinheit 3 und die Wandung des Behälters 5 bilden in Verbindung mit dem Medium 4 als Dielektrikum einen Kondensator. In Ausgestaltungen, in welchen die Wandung des Behälters 5 elektrisch nicht leitfähig ist, ist vorzugsweise eine zweite Sondeneinheit vorgesehen. Wird von der Elektronikeinheit 1 ein Messsignal von der Sondeneinheit 3 abgegriffen, so kann daraus die Kapazität des durch Sondeneinheit 3, den Behälter 5 und das Medium 4 gebildeten Kondensators bestimmt werden. Die Kapazität ist davon abhängig, welchen Füllstand das Medium 4 in dem Behälter 5 hat. Somit erlaubt die Bestimmung bzw. Überwachung der Kapazität die Bestimmung bzw. Überwachung des Füllstandes.

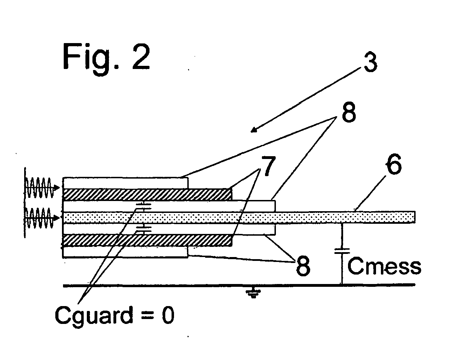

In der Fig. 2 ist im Schnittbild der prinzipielle Aufbau einer Sondeneinheit 3 dargestellt. Um die Sondenelektrode 6 ist koaxial eine Zusatzelektrode 7 angeordnet. Zwischen der Zusatzelektrode 7 und der Sondenelektrode 6 befindet sich eine Isolation 8. Eine ebensolche Isolation 8 befindet sich auch außerhalb der Zusatzelektrode 7. Im gezeigten Fall ist die Zusatzelektrode 7 nur teilweise isoliert. In einer weiteren Ausgestaltung handelt es sich um eine vollständig blanke, bzw. in einer zusätzlichen Ausgestaltung um eine vollständig isolierte Zusatzelektrode 7.

In dem hier dargestellten Fall wird auf die Zusatzelektrode 7 und die Sondenelektrode 6 jeweils das gleiche Wechselspannungssignal als Testsignal gegeben. Da die Zusatzelektrode 7 und die Sondenelektrode 6 somit auf dem gleichen elektrischen Potential liegen, ergibt sich idealerweise keine Kapazität zwischen diesen beiden Elektroden 6, 7, d.h. - wie dargestellt - es gilt: Cguard = 0.

Somit stellt sich durch die Zusatzelektrode 7, welche hier auch als Guard-Elektrode bezeichnet werden kann, kein zusätzlicher kapazitiver Effekt ein, so dass zwischen Sondenelektrode 6 und der Behälterwandung bzw. der zweiten Elektrode direkt die Messkapazität Cmess gemessen werden kann. Damit ist dann auch die Bestimmung bzw. Überwachung des Füllstandes möglich. Ein gleiches Signal auf Sondenelektrode 6 - dort handelt es sich somit um das Anregungssignal - und Zusatzelektrode 7 ergibt somit eine zusätzliche Kapazität Cguard = 0 und der aus dem von der Sondenelektrode 6 abgegriffenen Messsignal bestimmbare Kapazitätswert Cmess ermöglicht die Bestimmung bzw. Überwachung des Füllstands des Mediums.

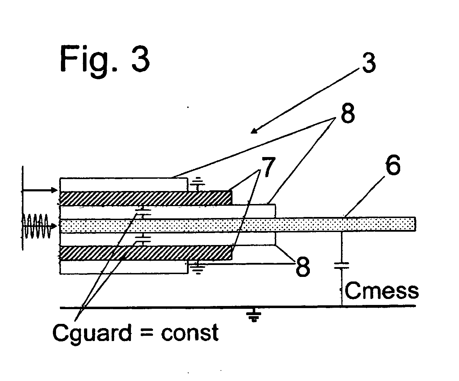

In der Fig. 3 ist ein anderer Fall der Beaufschlagung der Elektroden 6, 7 dargestellt. Der prinzipielle Aufbau der Sondeneinheit 3 unterscheidet sich von der in Fig. 2 dargestellten nicht.

Im in der Fig. 3 dargestellten Fall wird die Sondenelektrode 6 mit einem Wechselspannungssignal als Testsignal beaufschlagt, wobei die Zusatzelektrode 7 auf Masse liegt. Durch die resultierende Potentialdifferenz zwischen der Sondenelektrode 6 und der Zusatzelektrode 7 bildet sich eine Zusatzkapazität Cguard, deren Kapazitätswerte konstant ist, d.h. - wie in der Abbildung - es gilt: Cguard = const.. In diesem Fall ist der Guard der Sondeneinheit, bei welcher es sich um die Zusatzelektrode 7 handelt, sozusagen inaktiv und die gemessene Kapazität setzt sich zusammen aus der eigentlichen Kapazität Cmess, welche sich in Abhängigkeit von dem Medium ergibt, und der konstanten Kapazität Cguard zwischen Sondenelektrode 6 und Zusatzelektrode 7.

Eine Überwachung dieses Offsets, als Folge der Kapazität Cguard ermöglicht somit eine Aussage über die Befindlichkeit der Sondeneinheit 3 bzw. des Signalweges zwischen der Sondeneinheit 3 und der Elektronikeinheit 1. D.h. ändert sich der Wert von Cguard, als dem Offset, so bedeutet dies, dass auch eine Änderung am Messgerät stattgefunden hat bzw. aus einer Tendenz des Werts von Cguard lässt sich eine vorausschauende Wartung betreiben.

Dabei sind prinzipiell folgende Fälle zu unterscheiden:

1. Auf die Sondenelektrode 6 wird das Anregungssignal als Testsignal gegeben und die Zusatzelektrode 7 wird floatend gelassen, d.h. sie wird nicht mit einem Potential beaufschlagt. Dies erlaubt eine normale Messung des Füllstands, bei welcher die Zusatzelektrode 7 quasi keine Rolle spielt.

2. Auf die Sondenelektrode 6 wird das Anregungssignal als Testsignal gegeben und die Zusatzelektrode 7 wird mit Masse verbunden (gezeigt in der Fig. 3). In diesem Fall ergibt sich ein Kapazitätswert, welcher sich in Abhängigkeit vom Medium und einem Offset ergibt. Dieser Offset kann beispielsweise bei der Fertigung oder bei der Inbetriebnahme abgeglichen werden. Er sollte insbesondere konstant sein, so dass eine Änderung auf eine Beeinträchtigung der Sondeneinheit zurückzuführen ist.

3. Auf die Sondenelektrode 6 wird das Anregungssignal als Testsignal gegeben und die Zusatzelektrode 7 wird mit einem Guardsignal beauschlagt, d.h. auf beide Elektroden 6, 7 wird das amplituden- und phasengleiche Wechselspannungssignal gegeben (gezeigt in der Fig. 2). In diesem Fall ergibt sich bei funktionssicherer Sondeneinheit 3 nur die vom Medium abhängige Kapazität.

4. Die Sondenelektrode 6 wird floatend gelassen und das Anregungssignal wird als Testsignal auf die Zusatzelektrode 7 gegeben. In diesem Fall fungiert somit die Zusatzelektrode 7 als Messsonde und aus dem entsprechend von der Zusatzelektrode 7 abgegriffenen Messsignal wird wie bei einer normalen Messung der Füllstand des Mediums ermittelt. Dieser Fall entspricht somit dem obigen Fall 1.

5. Die Sondenelektrode 6 wird mit Masse verbunden, wobei das Anregungssignal als Testsignal auf die Zusatzelektrode 7 gegeben wird.

Es werden also für die Überwachung der Sondeneinheit 3 zwei Testmessungen vorgenommen. Die jeweils ermittelten Kapazitätswerte unterschieden sich durch den Offset, welcher sich durch die Kapazität Cguard zwischen Zusatz- und Sondenelektrode ergibt. Dieser Wert für Cguard sollte konstant sein, so dass seine Änderung als Zeichen für eine Einwirkung auf die Sondeneinheit gewertet werden kann.

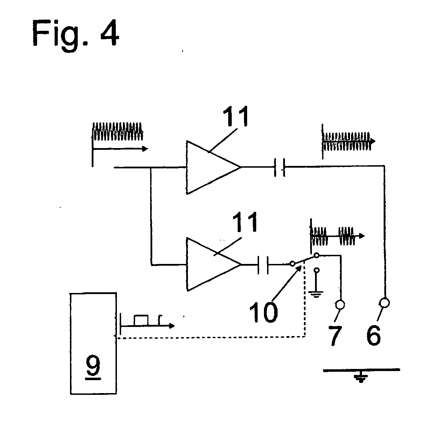

In der Fig. 4 ist ein Prinzipschaltbild dargestellt. Ein Mikroprozessor 9 stuert mit einem Rechtecksignal einen Schalter 10 und taktet somit das Signal, welches auf die Zusatzelektrode 7 gegeben wird. Die Sondenelektrode 6 wird ebenfalls über einen Verstärker 11 mit dem Ansteuersignal beaufschlagt. Als Referenz ist jeweils Masse angegeben, wobei die Masse entweder durch die zusätzliche Elektrode oder durch die Wandung des Behälters gegeben ist. Jeweils ein Kondensator hinter dem Verstärker 11 filtert den Gleichspannungsanteil aus den Signalen heraus.

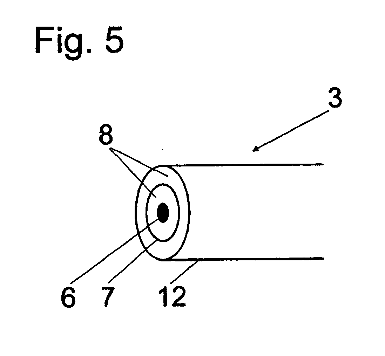

In der Fig. 5 ist eine weitere Ausgestaltung der Sondeneinheit 3 dargestellt, bei welcher eine Massenelektrode 12 die Zusatzelektrode 7 und die Sondenelektrode 6 koaxial umfasst. Bei dieser Ausgestaltung handelt es sich um einen Näherungsschalter, wobei insbesondere die Elektroden 6, 7, 12 flächig enden. Diese Ausgestaltung ermöglicht somit eine vollflächige und unter anderem auch mulchbare Einbringung des Messgerätes in den Prozess bzw. an die Behälterwandung. Die Sondeneinheit 3 ist im Wesentlichen rohrförmig ausgebildet, wobei das dem Prozess bzw. dem Medium zugewandte Ende der Sondeneinheit 3 sowohl Zugriff auf die Sondenelektrode 6, als auch auf die Zusatzelektrode 7 ermöglicht. Zwischen der Sondenelektrode 6 und der Zusatzelektrode 7 und der Zusatzelektrode 7 und der Massenelektrode 12 befindet sich eine Isolation 8.

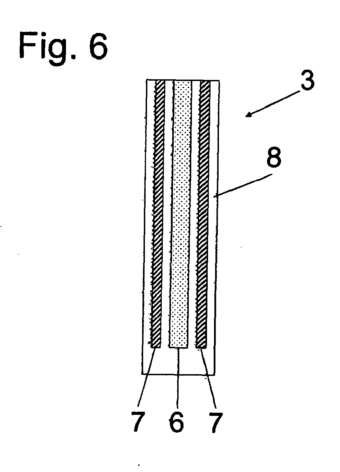

In der Fig. 6 ist eine Sondeneinheit 3 dargestellt, welche stabförmig ausgebildet ist. Eine Alternative dazu ist eine seilförmige Ausgestaltung. In diesem Schnitt ist dargestellt, dass die Sondenelektrode 6 bis zu ihrem Ende koaxial von der Zusatzelektrode 7 umgeben ist. Die Ausgestaltung ist dabei rotationssymmetrisch, so dass die Zusatzelektrode 7 rohrförmig ausgestaltet ist. Zwischen der Sondenelektrode 6 und der Zusatzelektrode 7 bzw. vollumfänglich um die Zusatzelektrode 7 befindet sich auch hier eine Isolation 8. Die Isolation 8 erfüllt bei aggressiven Medien auch das Ziel, dass somit die Sondeneinheit 3 vor Beschädigung geschützt wird. Die Isolation verhindert jedoch auch, dass eine direkte elektrische Verbindung zwischen der Sondeneinheit 3 und der Wandung des Behälters 5 bzw. der zweiten Elektrode auftritt. Die Zusatzelektrode 7 ist hier vollständig isoliert.

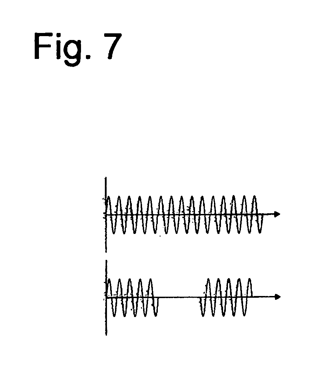

Die Fig. 7 zeigt die unterschiedlichen Signale, mit denen beispielsweise in einer Ausgestaltung die Sondenelektrode 6 bzw. die Zusatzelektrode 7 als Testsignale beaufschlagt werden. Auf die Sondenelektrode 6 gelangt ein normales Sinussignal, wobei auf die Zusatzelektrode 7 im hier gezeigten Fall zunächst ein phasengleiches, dann ein Massepotential und dann ein um 180° phasenverschobenes elektrisches Wechselspannungssignal gegeben wird. Dies also eine Ausgestaltung, bei welcher bei mindestens einer Messung ein Testsignal auf die Sondenelektrode 6 und ein anderes Testsignal auf die Zusatzelektrode gegeben werden. Dabei wird dann auch ein Antwortsignal von der Sondenelektrode 6 abgegriffen. Dieses Antwortsignal wird anschließend in Verbindung mit einem zweiten Antwortsignal in Bezug auf den Zustand des Messgerätes ausgewertet.

### Bezugszeichenliste

**Tabelle 2**

| | |
|---|---|
| 1 | Elektronikeinheit |
| 2 | Kabel |
| 3 | Sondeneinheit |
| 4 | Medium |
| 5 | Behälter |
| 6 | Sondenelektrode |
| 7 | Zusatzelektrode |
| 8 | Isolation |
| 9 | Mikroprozessor |
| 10 | Schalter |
| 11 | Verstärker |
| 12 | Masseelektrode |

## Patentansprüche

1. Verfahren zur Bedienung, insbesondere zur Kontrolle, einer Vorrichtung zur kapazitiven Bestimmung und/oder Überwachung des Füllstands eines Mediums,
wobei die Vorrichtung mindestens eine Sondeneinheit (3) mit einer Sondenelektrode (6) und einer Zusatzelektrode (7) aufweist,
**dadurch gekennzeichnet,**
**dass** die Sondenelektrode (6) mit einem ersten Testsignal in Form einer elektrischen Wechselspannung beaufschlagt und die Zusatzelektrode (7) mit Masse verbunden wird,
oder
**dass** die Zusatzelektrode (7) mit einem ersten Testsignal in Form einer elektrischen Wechselspannung beaufschlagt und die Sondenelektrode (6) mit Masse verbunden wird,
**dass** von der Sondeneinheit (3) ein erstes Antwortsignal abgegriffen wird,
**dass** die Sondenelektrode mit einem zweiten Testsignal in Form einer elektrischen Wechselspannung beaufschlagt wird,
**dass** die Zusatzelektrode mit einem zum zweiten Testsignal phasengleichen Signal oder mit einem zum Testsignal um 180° phasenverschobenen Signal beaufschlagt wird, wobei das Signal, mit welchem die Zusatzelektrode (7) beaufschlagt wird, die gleiche Frequenz und die gleiche Amplitude wie das zweite Testsignal aufweist
, **dass** von der Sondeneinheit (3) ein zweites Antwortsignal abgegriffen wird
und
**dass** das erste Antwortsignal und das zweite Antwortsignal dahingehend ausgewertet werden, ob sie sich durch einen Offset voneinander unterscheiden, und aus dem Offset eine Aussage über eine Beeinträchtigung der Sondeneinheit gewonnen wird.

2. Verfahren nach Anspruch 1,
**dadurch gekennzeichnet,**
**dass** das zeitliche Verhalten des Offsets zwischen dem ersten Antwortsignal und dem zweiten Antwortsignat ausgewertet wird.

3. Verfahren nach Anspruch 1 oder 2,
**dadurch gekennzeichnet,**
**dass** der Offset zwischen dem ersten Antwortsignal und dem zweiten Antwortsignal mit einem bekannten Offset-Wert verglichen wird.

4. Verfahren nach Anspruch 3,
**dadurch gekennzeichnet,**
**dass** der bekannte Offset-Wert bei der Fertigung oder bei der Installation der Vorrichtung ermittelt wird.

## Claims

1. Procedure designed for the operation, and particularly for the control, of a unit designed for the capacitive determination and/or monitoring of the level of a medium,
wherein the unit has at least one probe unit (3) with a probe electrode (6) and a supplementary electrode (7),
**characterized in that**
the probe electrode (6) is exposed to a first test signal in the form of an electrical alternating voltage and the supplementary electrode (7) is connected to ground,
or
**in that** the supplementary electrode (7) is exposed to a first test signal in the form of an electrical alternating voltage and the probe electrode (6) is connected to ground,
**in that** a first response signal is taken from the probe unit (3),
**in that** the probe electrode is exposed to a second test signal in the form of an electrical alternating voltage,
**in that** the supplementary electrode is exposed to a signal that is in phase with the second test signal or a signal that is phase-shifted by 180° in relation to the test signal, wherein the signal to which the supplementary electrode (7) is exposed has the same frequency and the same amplitude as the second test signal in that a second response signal is taken from the probe unit (3),
and
**in that** the first response signal and the second response signal are analyzed to determine whether they are different to one another by an offset and whether this offset can provide information about an impairment of the probe unit.

2. Procedure as claimed in Claim 1,
**characterized in that**
the time-specific behavior of the offset between the first response signal and the second response signal is evaluated.

3. Procedure as claimed in Claim 1 or 2,
**characterized in that**
the offset between the first response signal and the second response signal is compared to a known offset value.

4. Procedure as claimed in Claim 3,
**characterized in that**
the known offset value is determined when manufacturing or installing the unit.

## Revendications

1. Procédé destiné à l'exploitation, notamment au contrôle d'un dispositif destiné à la détermination capacitive et/ou à la surveillance du niveau d'un produit,
pour lequel le dispositif présente au minimum une unité de sonde (3) avec une électrode de sonde (6) et une électrode supplémentaire (7),
**caractérisé en ce**
**que** l'électrode de sonde (6) est alimentée avec un premier signal de test sous la forme d'une tension alternative électrique et l'électrode supplémentaire (7) est reliée à la masse,
ou
en ce que l'électrode supplémentaire (7) est alimentée avec un premier signal de test sous la forme d'une tension électrique alternative et l'électrode de sonde (6) est reliée à la masse,
en ce qu'un premier signal de réponse est prélevé par l'unité de sonde (3),
en ce que l'électrode de sonde est alimentée par un deuxième signal de test sous la forme d'une tension électrique alternative,
en ce que l'électrode supplémentaire est alimentée avec un signal en phase avec le deuxième signal de test ou avec un signal déphasé de 180 ° par rapport au signal de test, le signal avec lequel l'électrode supplémentaire (7) est alimentée présentant la même fréquence et la même amplitude que le deuxième signal de test,
en ce qu'un deuxième signal de réponse est prélevé par l'unité de sonde (3),
et
en ce que le premier signal de réponse et le deuxième signal de réponse sont évalués par rapport au fait qu'ils se distinguent l'un de l'autre avec un offset, et en ce que l'offset permet d'apprécier si l'unité de sonde est endommagée ou non.

2. Procédé selon la revendication 1,
**caractérisé en ce**
**que** le comportement temporel de l'offset entre le premier signal de réponse et le deuxième signal de réponse est évalué.

3. Procédé selon la revendication 1 ou 2.
**caractérisé en ce**
**que** l'offset entre le premier signal de réponse et le deuxième signal de réponse est comparé avec une valeur d'offset connue.

4. Procédé selon la revendication 3,
**caractérisé en ce**
**que** la valeur d'offset connue est déterminée lors de la fabrication ou lors de l'installation du dispositif.
